# EUROPEAN PATENT APPLICATION

(11) **EP 4 671 063 A1**
(43) Date of publication of application: **31.12.2025**
(21) Application number: 24306026.6
(22) Date of filing: 26.06.2024
(51) Int. Cl.: B60T 11/10

(54) **HYDRAULIC BRAKE CONTROL SYSTEM AND METHOD FOR A WORK VEHICLE AND A TRAILER**

(71) Applicant: KUBOTA CORPORATION, Osaka-shi, Osaka 556-8601 (JP)
(72) Inventor: PRIGENT, André, 60800 Crépy-en-Valois (FR)
(74) Representative: Cabinet Beau de Loménie

(57) **Abstract**

A hydraulic brake control system for a work vehicle (V) and a trailer (T) attached thereto, comprising:
- a hydraulic control line (CL) and a hydraulic supplementary line (SL) for supplying hydraulic fluid from the work vehicle to the trailer for trailer braking purpose, the supplementary line (SL) being able to be at a braking pressure level (BPL) under predetermined conditions,
- a high pressure hydraulic fluid accumulator (44) located on the trailer and storing hydraulic fluid for trailer braking.

The system further comprises a fluid flow switching device (66) configured to occupy two states, including:
- a first state in which the device (66) is configured to direct the fluid flowing on the control line (CL) to trailer brakes (34, 36), and
- a second state in which the device (66) is configured to direct the fluid on the control line (CL) to accumulator (44) for feeding the latter when the pressure in the supplementary line (SL) is at a feeding pressure level (FPL), distinct from the braking pressure level (BPL) and either greater or less than the latter.

## Description

### Technical field

The present invention relates to a hydraulic brake control system and method for a work vehicle and a trailer.

### State of the art

Work vehicles such as tractors are very often equipped with a trailer. As the tractors drive at higher and higher speeds braking is of the utmost importance, in particular for the trailer. The architecture of the hydraulic braking system between the tractor and the trailer is defined in Europe through a new regulation 2015/68 which sets for the measures with a view to enhancing the safety.

According to this new regulation, the braking system is implemented through two hydraulic lines between the tractor and the trailer for safety purpose:
- the first hydraulic line, called control line (CL), is at a pressure that can vary from 0 to 150 bars in order to send pressurized hydraulic fluid (ex: oil) to the trailer brakes for braking purpose;
- the second hydraulic line, called supplementary line (SL), is set to 0 bar to brake the trailer, e.g. when the hand brake is pulled, and can rise to 35 bars to unbrake the trailer, e.g. when the hand brake is released.

Still according to this new regulation, the tractor must deliver a volume of hydraulic fluid of 140 cm3 on the control line (CL) to the trailer in less than 0.6 s. This means that the trailer must be able to brake with a hydraulic fluid volume of 140 cm3.

When the trailer includes two axles or more, a volume around 140 cm3 per axle is required. Thus, the use of a hydraulic accumulator turns out to be compulsory for a trailer with more than one axle.

An issue may arise when the hydraulic accumulator is empty and braking of the trailer is required. An issue may even arise when the hydraulic accumulator is not filled enough to be able to complete the volume of hydraulic fluid coming from the tractor to reach the required volume of 140 cm3 per axle in order to feed all the braking cylinders of the trailer.

Firstly, the response time is increased for braking and therefore does not comply with the above European Regulation.

Secondly, the trailer must send a signal to the tractor so that an active warning appears on the tractor dashboard.

Thirdly, in some cases, the high flow amount that is required to feed all the braking cylinders of the trailer and the hydraulic accumulator may trigger the leakage detection system of the tractor. In such a case, the supplementary line is set to 0 bar and the trailer braking is operating without any proportionality. Put it another way, the trailer may brake with a greater deceleration force than the tractor which, in some circumstances, may lead to a brutal behaviour of the convoy (tractor and trailer).

### Presentation of the invention

The present invention aims at remedying at least one of the above technical problems.

The present invention relates to a hydraulic brake control system for a work vehicle V and a trailer T attached thereto and provided with trailer brakes, the hydraulic brake control system comprising:
- a hydraulic control line CL and a hydraulic supplementary line SL for supplying hydraulic fluid from the work vehicle to the trailer for trailer braking purpose, the hydraulic supplementary line SL being able to be at a braking pressure level BPL under predetermined conditions,
- a high pressure hydraulic fluid accumulator located on the trailer and storing hydraulic fluid for trailer braking,
characterized in that
the hydraulic brake control system further comprises a fluid flow switching device configured to occupy at least two states depending on the pressure in the hydraulic supplementary line SL, including:
- a first state in which the fluid flow switching device is configured to direct the hydraulic fluid flowing on the hydraulic control line CL to at least some of the trailer brakes, and
- a second state in which the fluid flow switching device is configured to direct the hydraulic fluid flowing on the hydraulic control line CL to the high pressure hydraulic fluid accumulator for feeding the latter when the pressure in the hydraulic supplementary line SL is at a feeding pressure level FPL that is distinct from the braking pressure level BPL, the fluid flow switching device being:
   - either configured to occupy the second state when the pressure in the hydraulic supplementary line SL is at a feeding pressure level FPL that is greater than the braking pressure level BPL,
   - or configured to occupy the second state when the pressure in the hydraulic supplementary line SL is at a feeding pressure level FPL that is less than the braking pressure level BPL.

Thanks to the above system, it is thus possible to easily create a new operating mode in the braking system (feeding mode) wherein a fluid flow switching device of the system is configured to direct the flow on the control line either towards the high pressure hydraulic fluid accumulator for feeding the latter, or towards at least some of the trailer brakes, depending on the pressure on the supplementary line SL. This new way of operation involves the generation of a distinct feeding pressure in the supplementary line SL to switch the fluid flow switching device accordingly. The above system makes it possible to simply feed the high pressure hydraulic fluid accumulator based on the existing hydraulic fluid lines in the hydraulic brake control system: the hydraulic control line CL dedicated to braking and the hydraulic supplementary line SL dedicated to braking and that is restrained to relatively low pressures by virtue of the existing European regulation. The above system involves the hydraulic supplementary line SL to create a feeding pressure level (FPL), distinct from the braking pressure level (BPL) and also involves the hydraulic control line CL to feed the high pressure hydraulic fluid accumulator from the newly created FPL in the SL line.

In an example, when the fluid flow switching device is configured to occupy the second state when the pressure in the hydraulic supplementary line SL is at a feeding pressure level FPL that is greater than the braking pressure level BPL, the fluid flow switching device is configured to occupy the first state when the pressure in the hydraulic supplementary line SL is no more than the braking pressure level BPL.

In an example, when the fluid flow switching device is configured to occupy the second state when the pressure in the hydraulic supplementary line SL is at a feeding pressure level FPL that is less than the braking pressure level BPL, the fluid flow switching device is configured to occupy the first state when the pressure in the hydraulic supplementary line SL is greater than the braking pressure level BPL.

In an example, the feeding pressure level FPL is at least 5 bars, preferentially 10 bars, above the braking pressure level BPL.

In another example, the feeding pressure level FPL is at least 5 bars, preferentially 10 bars, below the braking pressure level BPL.

In an example, the hydraulic brake control system is configured to generate the feeding pressure level FPL in the hydraulic supplementary line SL.

In an example, the hydraulic brake control system is configured to generate the feeding pressure level FPL in the hydraulic supplementary line SL based on a control signal (electric signal) received from the trailer T indicating that a hydraulic fluid pressure in the high pressure hydraulic fluid accumulator is less than a feeding threshold.

In an example, the hydraulic brake control system comprises in the work vehicle:
- a first hydraulic fluid circuit portion configured to generate the braking pressure level BPL in the hydraulic supplementary line SL,
- a second hydraulic fluid circuit portion configured to generate the feeding pressure level FPL in the hydraulic supplementary line SL, based on a control signal received from the trailer,
- a hydraulic fluid flow selector connected both to the first hydraulic fluid circuit portion and the second hydraulic fluid circuit portion and configured to select the hydraulic fluid circuit portion of which the hydraulic fluid pressure is the highest.

In an example, the first hydraulic fluid circuit portion comprises a hydraulic fluid pump connected to a hydraulic fluid valve that is configured to generate the braking pressure level BPL in the hydraulic supplementary line SL.

In an example, the second hydraulic fluid circuit portion comprises a hydraulic fluid pump configured to supply hydraulic fluid and connected to an electrically driven valve that is configured to be driven, depending on the control signal received from the trailer, so as to direct the supplied hydraulic fluid to another valve in order to generate the feeding pressure level FPL in the hydraulic supplementary line SL. Put it another way, an electric directional valve is configured to direct the flow to a relief valve in order to generate the feeding pressure level FPL when a control signal is received from the trailer.

In an example, the hydraulic brake control system comprises a damping accumulator configured to provide a stable feeding pressure level FPL whatever the output flow supplied by the hydraulic fluid pump.

In an example, the second hydraulic fluid circuit portion comprises an electric motor and a hydraulic fluid pump that is driven by the electric motor based on the control signal received from the trailer.

In an example, the hydraulic brake control system comprises in the work vehicle a hydraulic fluid circuit portion configured to generate both the braking pressure level BPL and the feeding pressure level FPL depending on the control signal.

In an example, the hydraulic fluid circuit portion comprises a hydraulic fluid pump connected to a hydraulic fluid valve that is electrically controlled so as to generate one of both the braking pressure level BPL and the feeding pressure level FPL depending on the control signal.

In an example, the hydraulic brake control system comprises in the work vehicle:
- a hydraulic fluid variable displacement pump configured to generate hydraulic fluid pressure,
- a first hydraulic fluid circuit portion connected to the hydraulic fluid variable displacement pump and including a pressure reducing device set at the braking pressure level BPL to generate the braking pressure level BPL from the hydraulic fluid pressure generated by the pump, the first hydraulic fluid circuit portion further including a first valve configured to transfer the generated braking pressure level BPL downstream the first hydraulic fluid circuit portion depending on a first control application signal,
- a second hydraulic fluid circuit portion connected to the hydraulic fluid variable displacement pump and including a pressure reducing device set at the feeding pressure level FPL to generate the feeding pressure level FPL from the hydraulic fluid pressure generated by the pump, the second hydraulic fluid circuit portion further including a second valve configured to transfer the generated feeding pressure level FPL downstream the second hydraulic fluid circuit portion depending on a second control application signal.

In an example, the hydraulic brake control system comprises in the work vehicle:
- a first hydraulic fluid circuit portion configured to generate the braking pressure level BPL in the hydraulic supplementary line SL,
- a second hydraulic fluid circuit portion configured to generate the feeding pressure level FPL in the hydraulic supplementary line SL,
- a hydraulic fluid flow selector connected both to the first hydraulic fluid circuit portion and the second hydraulic fluid circuit portion and configured to select the second hydraulic fluid circuit portion based on a control signal received from the trailer.

A hydraulic brake control method for a work vehicle and a trailer attached thereto and provided with trailer brakes, the work vehicle and the trailer comprising:
- a hydraulic control line CL and a hydraulic supplementary line SL for supplying hydraulic fluid from the work vehicle to the trailer for trailer braking purpose, the hydraulic supplementary line SL being able to be at a braking pressure level BPL under predetermined conditions,
- a high pressure hydraulic fluid accumulator located on the trailer and storing hydraulic fluid for trailer braking,
characterized in that
the method comprises one or the other of the following two steps depending on the pressure in the hydraulic supplementary line SL:
- a first step in which the hydraulic fluid flowing on the hydraulic control line CL is directed to at least some of the trailer brakes and
- a second step of directing the hydraulic fluid flowing on the hydraulic control line CL to the high pressure hydraulic fluid accumulator for feeding the latter when the pressure in the hydraulic supplementary line SL is at a feeding pressure level FPL that is distinct from the braking pressure level BPL, this second step being:
   - either performed when the pressure in the hydraulic supplementary line (SL) is at a feeding pressure level (FPL) that is greater than the braking pressure level (BPL),
   - or performed when the pressure in the hydraulic supplementary line (SL) is at a feeding pressure level (FPL) that is less than the braking pressure level (BPL).

This method offers the same advantages as those provided by the system as briefly mentioned above and will not be repeated here.

### Presentation of the drawings

The invention and its advantages will be better understood upon reading the detailed description made hereafter of different embodiments of the invention, given by way of non-limiting examples. This description makes reference to the pages of appended drawings, in which:
[Fig. 1] Figure 1 presents a schematic view of a first embodiment of the invention in a braking mode.
[Fig. 2A] Figure 2A presents an enlarged and partial view of the first embodiment of figure 1.
[Fig. 2B] Figure 2B presents a variant embodiment of the first embodiment of figure 2A.
[Fig. 3] Figure 3 presents a flow chart illustrating the steps of a method according to the first embodiment of the present invention.
[Fig. 4] Figure 4 presents the schematic view figure 1 in an operational mode where the accumulator is fed with hydraulic fluid.
[Fig. 5] Figure 5 presents a schematic view of a second embodiment of the invention.
[Fig. 6] Figure 6 presents a schematic view of a third embodiment of the invention.
[Fig. 7] Figure 7 presents a schematic view of a fourth embodiment of the invention.
[Fig. 8] Figure 8 presents a schematic view of a fifth embodiment of the invention in a braking mode.
[Fig. 9] Figure 9 presents the schematic view figure 8 in an operational mode where the accumulator is fed with hydraulic fluid (feeding mode).

In all the figures, similar elements are designated by identical numerical references.

### Detailed description

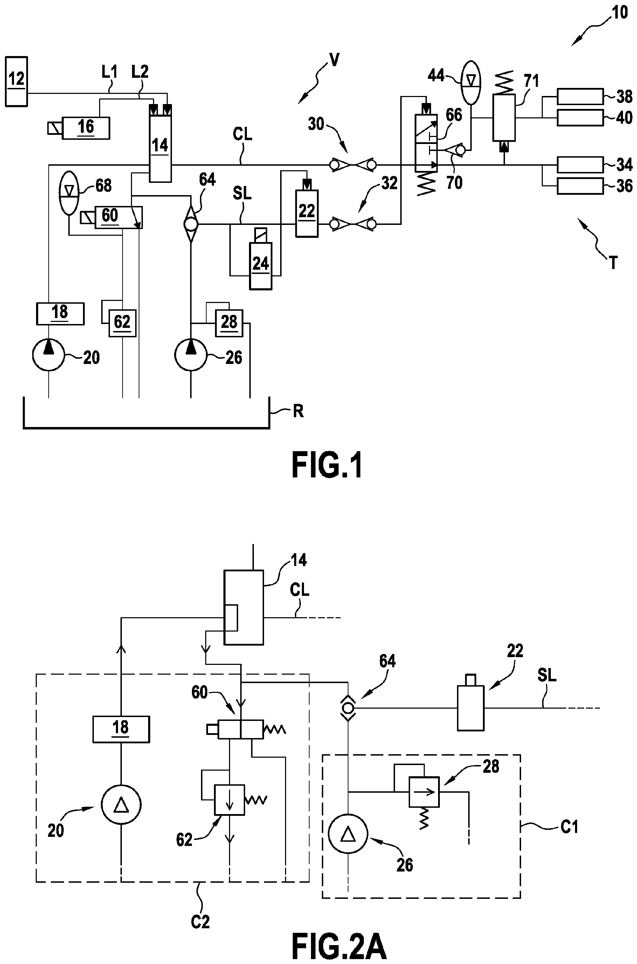

A first example embodiment of the invention will then be described with reference to figures 1 to 4. All the details of the system, i.e. all the components and the connection lines, are not represented for the sake of simplicity.

Figure 1 illustrates a new architecture for a hydraulic brake control system 10 between a work vehicle V and a trailer T according to an example embodiment of the invention. This hydraulic brake control system 10 can, for instance, be implemented in part on a work vehicle such as a tractor, or more generally on an agricultural vehicle and in part on a trailer connected or attached to the work vehicle.

As shown in figure 1, the hydraulic brake control system 10 includes several components that are conventionally used in connection with a hydraulic control line CL and a hydraulic supplementary line SL both for supplying hydraulic fluid from the work vehicle V to the trailer T for trailer braking purpose. Both hydraulic control line CL and hydraulic supplementary line SL extend in part on the work vehicle V and in part on the trailer T. The extension of the SL on the trailer is not represented as it is not in relation with the present disclosure. The hydraulic fluid used is preferably oil.

More particularly, in this example embodiment the hydraulic brake control system 10 may include, on the work vehicle side:
- a brake pedal 12;
- a main spool 14 of the hydraulic braking valve arranged on the control line CL; its main function is to direct the oil supplied by the pump either back to the oil tank when no braking is required or to the CL line when the driver is pressing the brake pedal 12 or pulling the hand brake (not represented);
- an electrovalve 16 connected to the hydraulic braking main valve 14 and that is able to pilot the latter when the driver uses the hand brake to stop the work vehicle;
- a priority valve 18;
- a braking pump 20 used to supply the control line CL with the maximum pressure that is authorized on the control line;
- a hydraulic valve 22 arranged on the supplementary line SL to deliver flow and pressure on the latter;
- an electrovalve 24 arranged on the supplementary line SL and that is able to pilot the supplementary line hydraulic valve 22;
- a transmission or supplementary pump 26;
- a 20 bar relief valve 28 (this relief valve may alternatively be set at a different pressure in a variant embodiment);
- a CL connector 30 arranged on the control line CL;
- a SL connector 32 arranged on the supplementary line SL.

The brake pedal 12 is connected to the main hydraulic piloting port of the main spool 14 and the electrovalve 16 is connected to a second hydraulic piloting port of the main spool 14, all these connections being made through different connection lines (only main connection lines L1 and L2 are illustrated).

Further, a tank or reservoir R storing hydraulic fluid is provided on the work vehicle side. The above braking pump 20 and supplementary pump 26 are connected to this tank for supplying fluid to the system.

Further, in this example embodiment the hydraulic brake control system 10 may include, on the trailer side:
- four trailer brakes 34, 36, 38, 40 (brake cylinders);
- a relay valve 71;
- a high pressure accumulator 44 which is needed as, in this example, there are two axles and four brakes on the trailer, which requires a total volume or more than 140 cm3 of hydraulic fluid for the braking operation
- a high-pressure check valve 70.

In this configuration, the two brakes 34 and 36 are supplied by the control line CL, whereas the other two brakes 38 and 40 are supplied by the high pressure accumulator 44 through the above-mentioned relay valve 71.

The high pressure accumulator 44 is connected to the control line CL through the check valve 70.

According to the present disclosure, a charging or feeding mode of the high pressure accumulator 44 is generated through the supplementary line SL in order to feed the high pressure accumulator 44 with hydraulic fluid when the fluid level is below a predetermined threshold.

In the present example embodiment, several components are added to the above described architecture in order to carry out this new operation mode.

In this respect, the hydraulic brake control system 10 may further include, on the work vehicle side:
- an electric selector 60;
- a relief valve 62, e.g. a 35 bar relief valve;
- a pressure selector 64;
and on the trailer side:
- a fluid flow switching device or accumulator direction valve 66.

As shown in figure 1, electric selector 60 is connected though different connection lines to components 14, 62and to the tank R. Relief valve 62 is connected to the tank R though a connection line. Braking pump 20 is connected to tank R and valve 18 which itself is connected to tank R although this is not represented in figure 1 for clarity purpose and main spool 14 through different connection lines. The pressure selector 64 is connected to electric selector 60 and to the circuit portion composed of supplementary pump 26 and 20 bar relief valve 28 though different connection lines. The electrovalve 24 is connected to a line connecting pressure selector 64 to hydraulic valve 22. The electrovalve 24 is also directly connected to hydraulic valve 22. Hydraulic valve 22 which is arranged on the SL line (provided with the SL connector 32) is connected to the accumulator direction valve 66.

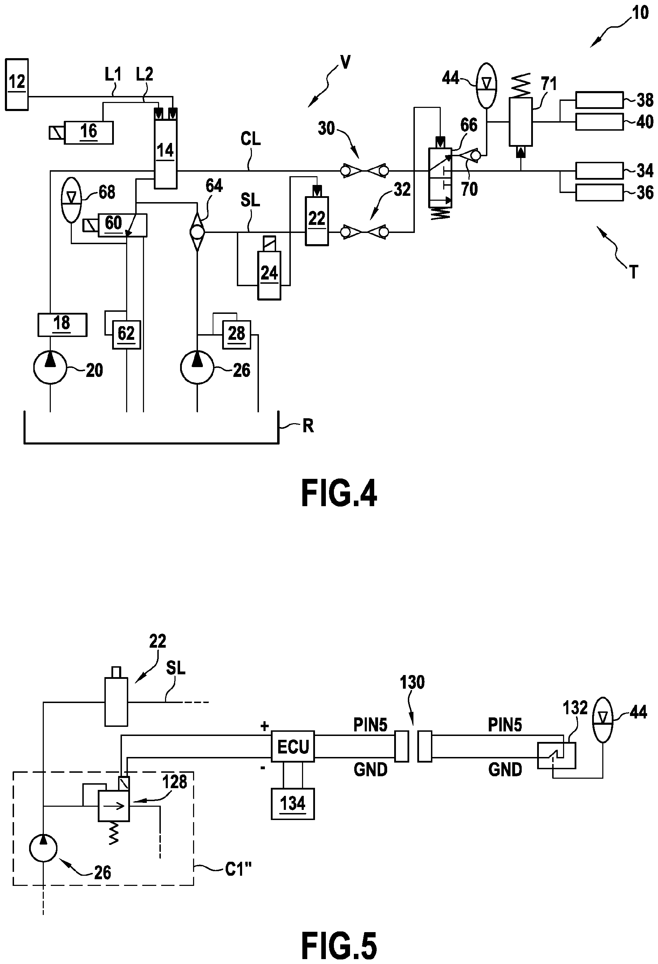

The accumulator direction valve 66 is configured to occupy at least two states depending on the level of the hydraulic fluid pressure in the hydraulic supplementary line SL. More particularly, the two main states are the following:
- a first state in which the accumulator direction valve 66 is configured to direct the hydraulic fluid flowing on the hydraulic control line CL to at least some of the trailer brakes (34, 36) when the pressure in the hydraulic supplementary line SL is no more than a predetermined pressure level called the braking pressure level BPL (this first state corresponds to a braking mode using the main braking line CL and is illustrated in figure 1 where only the trailer brakes 34 and 36 are supplied through control line CL), and
- a second state in which the accumulator direction valve 66 is configured to direct the hydraulic fluid flowing on the hydraulic control line CL to the high pressure hydraulic fluid accumulator 44 for feeding the latter when the pressure in the hydraulic supplementary line SL is at a pressure level, called the feeding pressure level FPL, that is distinct from the braking pressure level BPL and greater than the latter (BPL). This second state (illustrated in figure 4) corresponds to the above-mentioned charging or feeding mode using the supplementary line SL to create a new operation mode based on the creation of the feeding pressure level FPL in the hydraulic supplementary line SL (in the work vehicle circuit).

In a given example, the accumulator direction valve 66 has a spring that requires a 30 bar piloting pressure to shift from the first state to the second one. When the SL line is only at a 20 bar pressure (BPL), the trailer T remains in a braking mode.

To be noted that the hydraulic supplementary line SL is at the braking pressure level BPL under predetermined conditions, which are here normal driving conditions, i.e. when the parking brake is not pulled and the trailer T is connected to the work vehicle V.

The difference between the feeding pressure level FPL and the braking pressure level BPL has to be sufficient to create two distinct pressure levels far enough from each other in order to avoid any overlapping between the modes in case the pressure level varies and/or be not accurate enough. For example, a difference of 1 or 2 bar between the feeding pressure level FPL and the braking pressure level BPL is not sufficient to ensure distinct operational modes taking account of the above possible variations and/or inaccuracies. A 5 bar difference is a possible option, a 10 bar difference is a preferred one and a 15 bar difference is a further preferred one. To be noted that other values between 5 and 10bars, and 10 and 15 bars may also be envisaged. In the present example embodiment, the braking pressure level BPL is of 20 bars and the feeding pressure level FPL is of 35 bars. However, other values may be envisaged here, as well as in the other embodiments and variant embodiments.

Figure 2A is an enlarged and partial view of the figure 1 circuit and highlights two sub-circuits or hydraulic fluid circuit portions:
- a first hydraulic fluid circuit portion C1 configured to generate the braking pressure level BPL in the hydraulic supplementary line SL,
- a second hydraulic fluid circuit portion C2 configured to generate the feeding pressure level FPL in the hydraulic supplementary line SL.

More particularly, the first hydraulic fluid circuit portion C1 comprises the above hydraulic fluid pump or supplementary pump 26 connected to the hydraulic fluid valve or 20 bar relief valve 28. This sub-circuit is thus configured to generate the braking pressure level BPL in the hydraulic supplementary line SL.

The second hydraulic fluid circuit portion C2 comprises the hydraulic fluid pump or braking pump 20 configured to supply hydraulic fluid and connected to the electrically driven valve or electric selector 60 through priority valve 18 and main spool 14 (fig. 2A). The electric selector 60 is configured to be driven, depending on a control signal (electric control signal such as PIN5), so as to direct the supplied hydraulic fluid to another valve, the 35 bar relief valve 62 or to the tank (not represented in figure 2A). This sub-circuit is thus configured to generate the feeding pressure level FPL in the hydraulic supplementary line SL. The control signal will be further explained in relation with the embodiment of figure 5.

Further, the hydraulic fluid flow selector or pressure selector 64 is connected both to the first hydraulic fluid circuit portion C1 and the second hydraulic fluid circuit portion C2. The pressure selector 64 is configured to select the hydraulic fluid circuit portion of which the hydraulic fluid pressure is the highest.

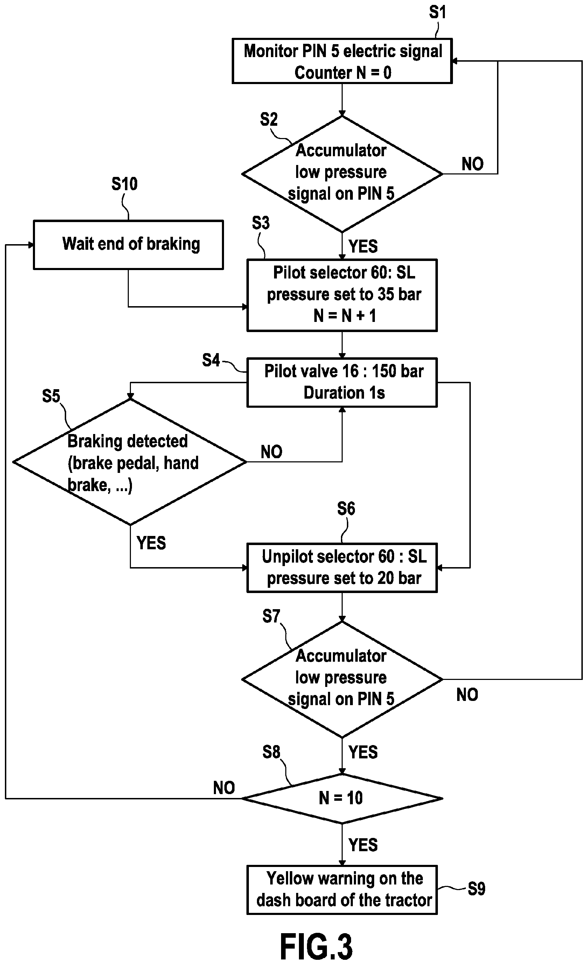

The operation of the circuit configuration of figures 1 and 2A will now be described with reference to the flowchart (algorithm) of figure 3 which details the steps of a method of feeding or charging the accumulator 44. The figure 3 algorithm (computer program) may be stored in a memory of the system (work vehicle) and executed by an ECU (Electronic Control Unit) or processor installed in the work vehicle V.

The method comprises a first step S1 of monitoring the electric signal received on a pin, called PIN5, of the work vehicle. In the course of this step a counter parameter N is also set to zero. This counter will be used to perform 'small' feeding cycles in order to ensure that the high pressure accumulator 44 will be correctly (sufficiently) filled without damaging the components of the circuit.

At next step S2, it is checked whether the PIN5 receives a signal (control signal).

In the affirmative, it means that the trailer sent a signal indicating that the level of hydraulic fluid (ex: oil) in the high pressure accumulator 44 is too low. In practice, it means that the fluid level is below a predetermined threshold, called the feeding threshold. In the negative, the algorithm returns to step S1.

In the affirmative, step S2 is followed by step S3 in the course of which the electric selector 60 is driven (following the reception of electric control signal on PIN5) so that the feeding pressure level FPL be generated on the SL line. In practice, the braking pump 20 flow is thus directed to the 35 bar relief valve 62 through valves 18, 14 and electric selector 60 to create a 35 bar pressure, as indicated by the arrows on figure 2A. The pressure selector 64 then selects the highest pressure among those generated by the above two sub-circuits C1 and C2 (fig. 2A), that is, in the present case, the 35 bar pressure generated by the second flow circuit portion C2, and directs this pressure on the SL line toward the accumulator directional valve 66 (figs. 1 and 2A). As already explained above, the valve 66 changes its state from the first state to the second state when the pressure level in the SL line changes from the braking pressure level BPL to the feeding pressure level FPL. Thus, valve 66 changes its position or state and directs the flow from the CL line to the high pressure accumulator 44. In the course of step S3 the loop parameter N is incremented by one unit.

In the course of the following step S4 the pilot valve 16 is actuated to pilot the valve 14 in order to increase the flow pressure on the CL line for a given and limited time duration (ex: 1s). The flow originates from the braking pump 20 which generates a high pressure of hydraulic fluid, typically of 150 bars. Figure 4 which takes over the configuration of figure 1 illustrates the feeding process with the flow being directed from the braking pump 20 to the CL line with accumulator directional valve 66 switched to the second position towards the high pressure accumulator 44.

The figure 3 algorithm checks in a further step S5 whether any braking action is detected, e.g. through a brake pedal switch, a hand brake etc.

If a braking action is detected, i.e. the driver actuated one of the brake actuators at disposal, then step S5 is followed by step S6 which makes provision for deselecting or switching off the electric selector 60 in order to shift the trailer in a braking mode (step S4 is thus interrupted). This, therefore, prevents from generating the 35 bar pressure on the SL line and maintains the pressure on the SL line at the braking pressure level, i.e. here 20 bars (the feeding process is stopped). Thus, the accumulator directional valve 66 changes its state to the first state and the flow on the CL line is directed through the valve 66 toward the trailer brakes 34, 36 (as shown in figure 1). As the braking pump 20 is already under pressure, the response time is only linked to the shifting speed of the accumulator directional valve 66 from the second state to the first state.

Conversely, if no braking action is detected, then step S5 goes back to step S4 already described.

Step S4 is also followed by step S6, in parallel of step S5.

Next step S6 is followed by step S7 in the course of which it is checked whether the PIN5 receives a signal (accumulator low pressure signal). This step is identical to step S2 already described.

In the negative, step S7 is followed by step S1 already described.

In the affirmative, step S7 is followed by step S8 in the course of which a test is performed to check whether the loop parameter N is equal to a predetermined threshold, here 10 for example. To be noted that a different number may be used, for example a smaller number such as 5.

In the affirmative (if the low pressure signal is still present on the PIN5), step S8 is followed by step S9 in the course of which a visual warning (ex: yellow) is caused to appear on the dashboard of the work vehicle, thereby informing the driver of an insufficient level of hydraulic fluid in the high pressure accumulator 44 although the scheduled feeding cycles have been performed.

In the negative, step S8 is followed by step S10 waiting for the end of braking and the latter is followed by step S3 already described.

The hydraulic brake control system 10 may further include, on the work vehicle side a damping accumulator 68 (optional) that is connected to the connecting line between components 60 and 62 (figs. 1 and 4). The damping accumulator 68 is configured to provide a stable feeding pressure level FPL while the trailer T is in the feeding/charging mode, whatever the output flow supplied by the braking pump 20. This is because when some hydraulic fluid (oil) is sent to the high pressure accumulator 44, some pressure fluctuation may be generated on the accumulator directional valve 66. In particular, the valve 62 might not have sufficient fluid, which could therefore cause a lack of pressure in the second circuit C2 of figure 2A, thereby preventing from generating the 35 bar pressure. As a consequence, the pressure selector 64 could select the pressure (BPL) from the first circuit C1, which thus switches the valve 66 to the first state and enter into a trailer braking mode (unintentional braking). Thanks to the damping accumulator 68 such a situation may be avoided.

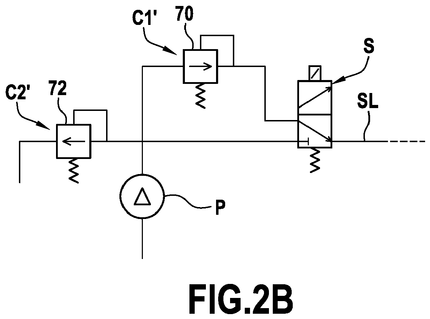

According to a variant embodiment of the figure 2A architecture, the hydraulic brake control system of figure 2B may comprise in the work vehicle:
- a first hydraulic fluid circuit portion C1' configured to generate the braking pressure level BPL in the hydraulic supplementary line SL,
- a second hydraulic fluid circuit portion C2' configured to generate the feeding pressure level FPL in the hydraulic supplementary line SL,
- a hydraulic fluid flow selector S connected both to the first hydraulic fluid circuit portion C1' and the second hydraulic fluid circuit portion C2' and configured to select the second hydraulic fluid circuit portion C2' based on an electric signal (ex: signal PIN 5) received from the trailer.

In this variant embodiment, both pressures BPL and FPL are permanently generated and the selector S only selects the circuit generating the FPL when the signal representative of a low hydraulic fluid (ex: oil) level in the HPA 44 (ex: signal PIN 5) is generated by the trailer T and received by the work vehicle V.

According to this variant embodiment, a pump P may be included in the system to generate fluid pressure that is conveyed to both circuits wherein:
- the first hydraulic fluid circuit portion C1' includes a pressure reducing device 70 set at the BPL pressure, e.g. 20bars,
- the second hydraulic fluid circuit portion C2' includes a relief valve 72 set at the FPL pressure, e.g. 35bars.

Such a configuration is less prone to pressure fluctuation and thus makes it possible to avoid using the damping accumulator 68. Also, the valve 60 of figure 2A may be omitted. The architecture of the hydraulic brake control system circuit of figure 2B is thus simplified.

Several different ways of generating the FPL in the SL line (whatever its value provided that it is sufficiently distinct from the BPL as explained above) will now be described with reference to figures 5 to 7.

A second embodiment differing from the first embodiment of figures 1, 2A and 4 and the variant embodiment of figure 2B is illustrated in figure 5.

In this second embodiment, a hydraulic fluid circuit portion is configured to generate both the braking pressure level BPL and the feeding pressure level FPL depending on an electric control signal.

The configuration of this second embodiment is based on the first circuit portion C1 of figure 2A, modified and now called C1". The supplementary pump 26 and the hydraulic valve 22 are the same. The 20 bar relief valve 28 is replaced with a hydraulic fluid valve 128 (pilot valve) that is electrically controlled so as to generate one of both the braking pressure level BPL and the feeding pressure level FPL at a time. Both pressure levels are generated by the same component depending on the electric control which may be performed by the ECU (Electronic Control Unit) of the work vehicle.

More particularly, the circuit of Figure 5 includes an electric connector 130 that is configured to enable electric connection between the vehicle V and the trailer T. On the trailer side, a pressure switch 132 is located between the high pressure accumulator 44 and the electric connector 130. The pressure switch 130 is able to open or close depending on the pressure level inside the accumulator 44. If the pressure in the accumulator 44 is below a threshold (e.g. 115 bars), then the pressure switch 132 is closed.

On the vehicle side, the ECU has inputs, outputs and may be connected to a battery 134 for its power supply. The inputs of the ECU are connected to both sides of the pressure switch 132 of the trailer through the Ground PIN (GND) and PIN5 of the electric connector 130.The ECU can detect if the pressure switch 132 is open (accumulator pressure above threshold) or closed (accumulator pressure below threshold) thanks to a very small current of several mA sent to the PIN5 (electric control signal). If there is no current back in the Ground PIN, then it means that the pressure switch 132 is open (the pressure in the accumulator 44 is above 115 bars). To summarize, an electric current of several mA is sent on one pin. If this current goes back through the other pin, then this means that the switch is closed. Depending on the result, the ECU thus generates a BPL current (i.e. for example 0.45A) or a FPL current (i.e. for example 0.65A) sent to pilot valve 128. The ECU is powered from the battery 134 and can, therefore, generate and send to pilot valve 128, for example, a current of 0.45A under 12V.The setting of pilot valve 128 under a piloting current of 0.45A is 20 bars in this example. If the pressure drops below 115 bars in the accumulator 44, the pressure switch 132 closes and the ECU receives a current of several mA back on its ground input (Ground PIN). The ECU can then generate a higher current of 0.65A, for example, and send it to pilot valve 128. The setting of pilot valve 128 under a 0.45A piloting current may be 20 bar and 35 bar with a 0.65A piloting current in this example. Other ways of operating the circuit, in particular of piloting valve 128, may be envisaged.

Thus, to summarize, when the electric control signal is a signal sent by the trailer on the PIN5, i.e. is indicative of a low level of hydraulic fluid in the accumulator 44, the pilot valve 128 is driven by the ECU so as to generate for example a 35 bar pressure level (FPL) in the SL line. Such a pressure level causes the switching valve 66 to switch to the second feeding state in order to allow feeding of the accumulator 44 with the flow of fluid circulating on the CL line (from the pump 20).

In this second embodiment, the first circuit C1 " is autonomous to generate both BPL and FPL pressures. The components 60, 62 and 64 of the circuit of figures 1 and 2A may be omitted but the other components are kept and used in their primary function.

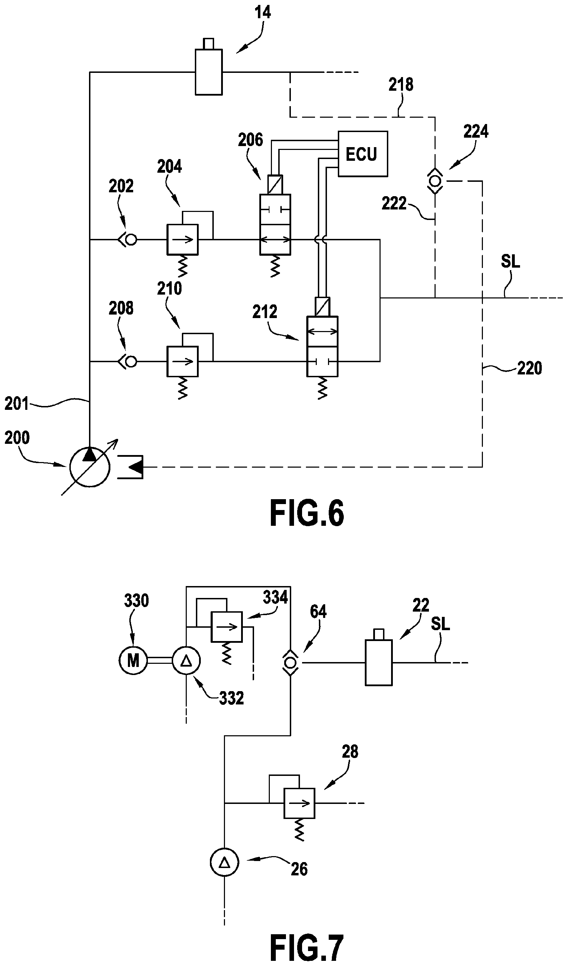

A third embodiment differing from the first embodiment of figures 1, 2A and 4 and the variant embodiment of figure 2B is illustrated in figure 6.

The configuration of this third embodiment replaces the circuit portion configuration of figure 2A wherein the pump 20 is replaced with a variable displacement pump 200 configured to generate a hydraulic fluid pressure. Pump 200 may be of the IS type (load sensing). It provides high pressure and high flow capacity.

The circuit configuration of figure 6 includes:
- a first hydraulic fluid circuit portion connected to the hydraulic fluid variable displacement pump 200 and configured to generate the braking pressure level BPL from the hydraulic fluid pressure generated by the pump,
- a second hydraulic fluid circuit portion connected to the hydraulic fluid variable displacement pump 200 and configured to generate the feeding pressure level FPL from the hydraulic fluid pressure generated by the pump.

More particularly, the first hydraulic fluid circuit portion includes, from upstream to downstream, a check valve 202 (optional), a pressure reducing device 204 set at the braking pressure level BPL to generate the braking pressure level BPL, and a first valve 206 configured to transfer the generated braking pressure level BPL downstream the first hydraulic fluid circuit portion depending on a first control application signal.

More particularly, the second hydraulic fluid circuit portion includes, from upstream to downstream, a check valve 208 (optional), a pressure reducing device 210 set at the feeding pressure level FPL to generate the feeding pressure level FPL, and a second valve 212 configured to transfer the generated feeding pressure level FPL downstream the second hydraulic fluid circuit portion depending on a second control application signal

The circuit configuration of figure 6 further includes an upstream supply line 201 that connects the variable displacement pump 200 to both first and second hydraulic fluid circuit portions, as well as the main spool14 of the hydraulic braking valve (unchanged with respect to figures 1 and 2A).

More particularly, the variable displacement pump 200 has an hydraulic command named « load sensing ». This pump has the capacity of generating the pressure which depends on the need and it always generates the highest pressure required between all the requests. Each function must then reduce the pressure to the need if it is too high for it.

In the present case, the pressure reducing device 204 is a 20 bar pressure reducer and the pressure reducing device 210 is a 35 bar pressure reducer. If the pump 200 is generating 120 bars for the front loader of the vehicle, a pressure of 20 or 35 bars can be generated thanks to these two pressure reducers 204, 210. If the pump 200 is at rest (no function activated), it generates at least a pressure of 20 bars.

From the control point of view, an ECU is also used as for the figure 5 embodiment. The ECU has several outputs including one output for each valve 206 and 212. Therefore, if the BPL pressure is required (first control application signal), the ECU will not pilot any valve or if the FPL pressure is required (second control application signal) the ECU will pilot both valves 206 and 212.

As shown in this figure, the control in this circuit is hydraulic through the connection lines 218, 220, 222 between the control line CL, the supplementary line SL and the pump 200. For example, the variable displacement pump 200 can generate a volume of fluid between 0 and 45 cm3 per revolution depending on the balance between a spring (increasing the displacement) and an hydraulic signal on the pilot line 220 (decreasing the displacement).

The appropriate displacement of the pump is obtained when the output pressure on the supply line 201 corresponds to the value received on the pilot line 220.

A selector 224 is configured to select the highest pressure between the required pressure on the CL line (output of valve 14) and the SL line. Several operational situations may arise:
1) The vehicle is driving on the road with the required pressure in the CL line equal to 0 bar and the required pressure in the SL line equal to BPL. Then, the hydraulic signal out of the selector 224 is BPL and the pump generates the pressure BPL.
2) The vehicle is driving on the road with the required pressure on the CL line equal to 0 bar and the required pressure on the SL line equal to FPL. Then, the hydraulic signal out of the selector 224 is FPL and the pump generates the pressure FPL.
3) The vehicle is driving on the road with the required pressure on the CL line equal to, for example, 120 bars and the required pressure on the SL line equal to BPL. Then, the pump generates a pressure of 120 bars. Thus, valve 204 reduces the supplied pressure to BPL and valve 206 enables BPL to be established on the SL line.

It is to be noted that, in the present embodiment, the control of valves 206 and 212 is inverted with a view to obtaining a more robust configuration in case of electric failure. Thus this configuration makes it possible to avoid the situation where the two valves are open or closed at the same time.

A fourth embodiment differing from the first embodiment of figures 1, 2A and 4 and the variant embodiment of figure 2B is illustrated in figure 7.

The configuration of this fourth embodiment tales over the first circuit of figure 2A with the supplementary pump 26, the 20 bar relief valve 28 (first circuit portion) and the hydraulic valve 22.

The figure 7 circuit configuration further includes a second circuit portion comprising an electric motor 330 and a hydraulic fluid pump 332 that is driven by the motor 330 when the PIN5 signal is received by the vehicle (from the trailer). The circuit further includes a valve 334 that is a relief valve set at the FPL pressure level so that the second circuit portion is configured to generate the FPL pressure level when being operated. The pressure selector 64 is the same as that of figures 1 and 2A and selects the highest pressure between the two circuit portions. When the PIN5 signal (control signal) is not received from the trailer, the pressure selector 64 only selects the BPL pressure level (ex: 20 bar) generated by the first circuit portion (pump 26 and valve 28) so as to set the SL line at the BPL pressure (braking mode).

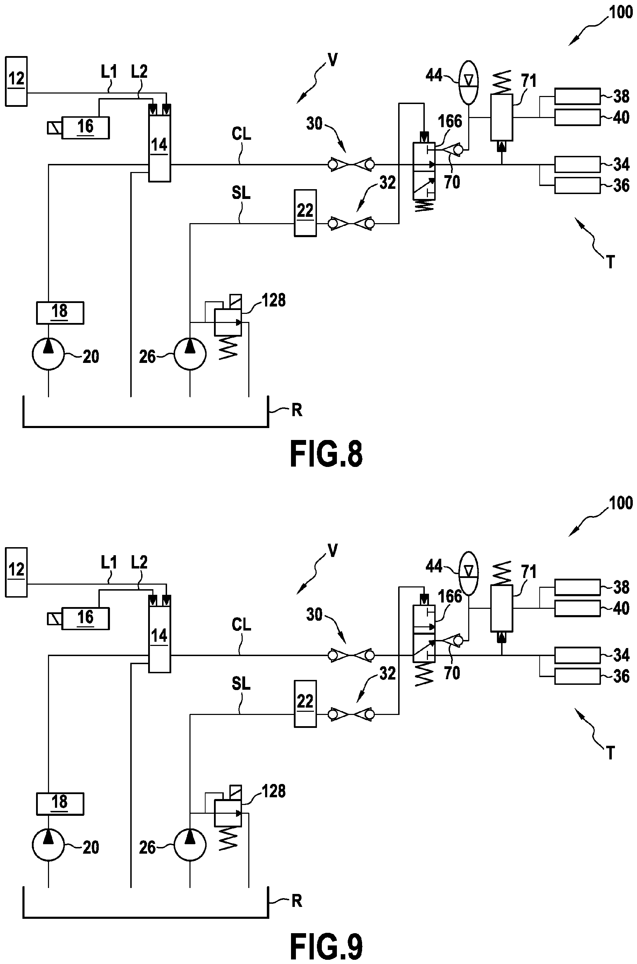

A fifth embodiment differing from the previous embodiments and variants is illustrated in figures 8 and 9. The hydraulic brake control system 100 operates differently from what has been described above: the feeding mode is operated when the feeding pressure level FPL is lower than the braking pressure level BPL and distinct enough from the latter.

The figures 8 and 9 take over the schematic circuit of figures 1 and 4 respectively and mainly differ in that the fluid flow switching device or accumulator direction valve 166 has a lower spring force than that of valve 66, for example equivalent to 20 bars. When the braking pressure level BPL is generated in the circuit (for example a 25 bar pressure), valve 166 is then shifted to the piloted position (valve 166 is urged into its active position under the pressure of the flow of hydraulic fluid which is sufficient to withstand the spring force) where the flow of hydraulic fluid is directed from the inlet port to the outlet port connected to the trailer brakes 34, 36 (figure 8). This corresponds to a first state of valve 166. When a low feeding pressure level FPL is generated in the circuit (for example a 15 bar pressure), the pressure of fluid is not sufficient to compensate for the spring force and, naturally, the spring force maintains the valve 166 in its rest position, so that the hydraulic fluid flow from the SL line is directed from the inlet port to the outlet port connected to the high-pressure accumulator 44 (figure 9). This corresponds to a second state of valve 166. In this example, a functional margin of 10 bars is used between the FPL and the BPL but other examples may be used such as a value of 20 bars for BPL.

Further, in this embodiment the circuit of figures 8 and 9 does not include the components 60, 62, 64 and 68 and the component 28 is replaced with a component 128 identical to that of figure 5 where the hydraulic fluid valve 128 (pilot valve) is electrically controlled so as to generate one of both the braking pressure level BPL and the feeding pressure level FPL at a time. Both pressure levels are generated by the same component depending on the command (electric control signal) which may be sent by the ECU (Electronic Control Unit) of the work vehicle. Valve 128 is thus able to generate a low FPL pressure of 15bars (for example) when the low pressure signal from the trailer is received in the PIN5 and valve 166 therefore shifts its position to that of the feeding mode (figure 9).

It is to be noted that the circuit of figure 2B may also be used to operate as described with reference to figures 8 and 9 with the valve 166, that is, by implementing the feeding mode when the FPL is below the BPL subject to slight modifications. Thus, the circuit C1' would generate the FPL and the circuit C2' would generate the BPL.

The circuit of figure 5 may also be used to operate as described with reference to figures 8 and 9 including the valve 166 as the valve 128 is capable of generating both pressures.

Further, the circuit of figure 6 may also be used to operate as described with reference to figures 8 and 9 including the valve 166 since the valves 206 and 212 may be driven as desired to be blocked or open to let the corresponding pressure reach the SL line. In practice, one of the two pressures FPL and BPL is blocked, that is, the BPL (through blocking valve 206) in this configuration where the feeding mode is selected. Thus, the valve 212 is driven so as to be open and let the flow of hydraulic fluid under the FPL pressure reach the SL line so that the spring of valve 166 be pushed in the rest position to direct the flow to the high-pressure accumulator 44.

In all the above examples using the circuits of figures 2B, 5 and 6, the part of the circuit of figures 8 and 9 that is on the trailer side is kept unchanged. Only the part of the circuit on the work vehicle side is modified.

Although the present invention has been described with reference to specific exemplary embodiments, it is obvious that modifications and changes can be carried out on these examples with departing from the general scope of the invention as defined by the claims. In particular, individual features of the different embodiments illustrated/mentioned can be combined into additional embodiments. Consequently, the description and the drawings must be considered in an illustrative, rather than a restrictive sense.

It is also obvious that all the features described with reference to a method are transposable, alone or in combination, to a device, and conversely, all the features described with reference to a device are transposable, alone or in combination, to a method.

## Claims

1. A hydraulic brake control system for a work vehicle (V) and a trailer (T) attached thereto and provided with trailer brakes (34-40), the hydraulic brake control system comprising:
- a hydraulic control line (CL) and a hydraulic supplementary line (SL) for supplying hydraulic fluid from the work vehicle to the trailer for trailer braking purpose, the hydraulic supplementary line (SL) being able to be at a braking pressure level (BPL) under predetermined conditions,
- a high pressure hydraulic fluid accumulator (44) located on the trailer and storing hydraulic fluid for trailer braking,
**characterized in that**
the hydraulic brake control system further comprises a fluid flow switching device (66; 166) configured to occupy at least two states depending on the pressure in the hydraulic supplementary line (SL), including:
- a first state in which the fluid flow switching device (66; 166) is configured to direct the hydraulic fluid flowing on the hydraulic control line (CL) to at least some of the trailer brakes (34, 36), and
- a second state in which the fluid flow switching device (66; 166) is configured to direct the hydraulic fluid flowing on the hydraulic control line (CL) to the high pressure hydraulic fluid accumulator (44) for feeding the latter when the pressure in the hydraulic supplementary line (SL) is at a feeding pressure level (FPL) that is distinct from the braking pressure level (BPL), the fluid flow switching device (66; 166) being:
- either configured to occupy the second state when the pressure in the hydraulic supplementary line (SL) is at a feeding pressure level (FPL) that is greater than the braking pressure level (BPL),
- or configured to occupy the second state when the pressure in the hydraulic supplementary line (SL) is at a feeding pressure level (FPL) that is less than the braking pressure level (BPL).

2. The hydraulic brake control system of claim 1, wherein, when the fluid flow switching device (166) is configured to occupy the second state when the pressure in the hydraulic supplementary line (SL) is at a feeding pressure level (FPL) that is greater than the braking pressure level (BPL), the fluid flow switching device (166) is configured to occupy the first state when the pressure in the hydraulic supplementary line (SL) is no more than the braking pressure level (BPL).

3. The hydraulic brake control system of claim 1, wherein, when the fluid flow switching device (66) is configured to occupy the second state when the pressure in the hydraulic supplementary line (SL) is at a feeding pressure level (FPL) that is less than the braking pressure level (BPL), the fluid flow switching device (166) is configured to occupy the first state when the pressure in the hydraulic supplementary line (SL) is greater than the braking pressure level (BPL).

4. The hydraulic brake control system of claim 2, wherein the feeding pressure level (FPL) is at least 5 bars, preferentially 10 bars, above the braking pressure level (BPL).

5. The hydraulic brake control system of claim 3, wherein the feeding pressure level (FPL) is at least 5 bars, preferentially 10 bars, below the braking pressure level (BPL).

6. The hydraulic brake control system of any one of claims 1 to 5, wherein the hydraulic brake control system is configured to generate the feeding pressure level (FPL) in the hydraulic supplementary line (SL).

7. The hydraulic brake control system of claim 6, wherein the hydraulic brake control system is configured to generate the feeding pressure level (FPL) in the hydraulic supplementary line (SL) based on a control signal (PIN 5) received from the trailer (T) indicating that a hydraulic fluid pressure in the high pressure hydraulic fluid accumulator (44) is less than a feeding threshold.

8. The hydraulic brake control system of claim 7, wherein the hydraulic brake control system comprises in the work vehicle:
- a first hydraulic fluid circuit portion (C1) configured to generate the braking pressure level (BPL) in the hydraulic supplementary line (SL),
- a second hydraulic fluid circuit portion (C2) configured to generate the feeding pressure level (FPL) in the hydraulic supplementary line (SL), based on a control signal (PIN 5) received from the trailer,
- a hydraulic fluid flow selector (64) connected both to the first hydraulic fluid circuit portion (C1) and the second hydraulic fluid circuit portion (C2) and configured to select the hydraulic fluid circuit portion of which the hydraulic fluid pressure is the highest.

9. The hydraulic brake control system of claim 8, wherein the first hydraulic fluid circuit portion (C1) comprises a hydraulic fluid pump (26) connected to a hydraulic fluid valve (28) that is configured to generate the braking pressure level (BPL) in the hydraulic supplementary line (SL).

10. The hydraulic brake control system of claim 8 or 9, wherein the second hydraulic fluid circuit portion (C2) comprises a hydraulic fluid pump (20) configured to supply hydraulic fluid and connected to an electrically driven valve (60) that is configured to be driven, depending on the control signal (PIN 5) received from the trailer, so as to direct the supplied hydraulic fluid to another valve (62) in order to generate the feeding pressure level (FPL) in the hydraulic supplementary line (SL).

11. The hydraulic brake control system of claim 10, wherein it comprises a damping accumulator (68) configured to provide a stable feeding pressure level (FPL) whatever the output flow supplied by the hydraulic fluid pump (20).

12. The hydraulic brake control system of any of claims 7 to 10, wherein the second hydraulic fluid circuit portion comprises an electric motor (M) and a hydraulic fluid pump (332) that is driven by the electric motor based on the control signal (PIN 5) received from the trailer.

13. The hydraulic brake control system of claim 7, wherein the hydraulic brake control system comprises in the work vehicle a hydraulic fluid circuit portion configured to generate both the braking pressure level (BPL) and the feeding pressure level (FPL) depending on the control signal (PIN5).

14. The hydraulic brake control system of the preceding claim, wherein the hydraulic fluid circuit portion comprises a hydraulic fluid pump (26) connected to a hydraulic fluid valve (128) that is electrically controlled so as to generate one of both the braking pressure level (BPL) and the feeding pressure level (FPL) depending on the control signal.

15. The hydraulic brake control system of claim 6, wherein the hydraulic brake control system comprises in the work vehicle:
- a hydraulic fluid variable displacement pump (200) configured to generate hydraulic fluid pressure,
- a first hydraulic fluid circuit portion connected to the hydraulic fluid variable displacement pump and including a pressure reducing device (204) set at the braking pressure level (BPL) to generate the braking pressure level (BPL) from the hydraulic fluid pressure generated by the pump (200), the first hydraulic fluid circuit portion further including a first valve (206) configured to transfer or not the generated braking pressure level (BPL) downstream the first hydraulic fluid circuit portion depending on a first control application signal,
- a second hydraulic fluid circuit portion connected to the hydraulic fluid variable displacement pump and including a pressure reducing device (210) set at the feeding pressure level (FPL) to generate the feeding pressure level (FPL) from the hydraulic fluid pressure generated by the pump (200), the second hydraulic fluid circuit portion further including a second valve (212) configured to transfer or not the generated feeding pressure level (FPL) downstream the second hydraulic fluid circuit portion depending on a second control application signal.

16. The hydraulic brake control system of claim 6, wherein the hydraulic brake control system comprises in the work vehicle:
- a first hydraulic fluid circuit portion (C1') configured to generate the braking pressure level (BPL) in the hydraulic supplementary line (SL),
- a second hydraulic fluid circuit portion (C2') configured to generate the feeding pressure level (FPL) in the hydraulic supplementary line (SL),
- a hydraulic fluid flow selector (S) connected both to the first hydraulic fluid circuit portion (C1') and the second hydraulic fluid circuit portion (C2') and configured to select the second hydraulic fluid circuit portion (C2') based on a control signal (PIN 5) received from the trailer.

17. A hydraulic brake control method for a work vehicle and a trailer attached thereto and provided with trailer brakes (34-40), the work vehicle and the trailer comprising:
- a hydraulic control line (CL) and a hydraulic supplementary line (SL) for supplying hydraulic fluid from the work vehicle to the trailer for trailer braking purpose, the hydraulic supplementary line (SL) being able to be at a braking pressure level (BPL) under predetermined conditions,
- a high pressure hydraulic fluid accumulator (44) located on the trailer and storing hydraulic fluid for trailer braking,
**characterized in that**
the method comprises one or the other of the following two steps depending on the pressure in the hydraulic supplementary line (SL):
- a first step in which the hydraulic fluid flowing on the hydraulic control line (CL) is directed to at least some of the trailer brakes (34-40), and
- a second step of directing the hydraulic fluid flowing on the hydraulic control line (CL) to the high pressure hydraulic fluid accumulator (44) for feeding the latter when the pressure in the hydraulic supplementary line (SL) is at a feeding pressure level (FPL) that is distinct from the braking pressure level (BPL), this second step being:
- either performed when the pressure in the hydraulic supplementary line (SL) is at a feeding pressure level (FPL) that is greater than the braking pressure level (BPL),
- or performed when the pressure in the hydraulic supplementary line (SL) is at a feeding pressure level (FPL) that is less than the braking pressure level (BPL).

## Amended claims

### Amended claims in accordance with Rule 137(2) EPC.

1. A hydraulic brake control system for a work vehicle (V) and a trailer (T) attached thereto and provided with trailer brakes (34-40), the hydraulic brake control system comprising:
- a hydraulic control line (CL) and a hydraulic supplementary line (SL) for supplying hydraulic fluid from the work vehicle to the trailer for trailer braking purpose, the hydraulic supplementary line (SL) being able to be at a braking pressure level (BPL) under predetermined conditions,
- a high pressure hydraulic fluid accumulator (44) located on the trailer and storing hydraulic fluid for trailer braking,
the hydraulic brake control system further comprising a fluid flow switching device (66; 166) configured to occupy at least two states depending on the pressure in the hydraulic supplementary line (SL), including:
- a first state in which the fluid flow switching device (66; 166) is configured to direct the hydraulic fluid flowing on the hydraulic control line (CL) to at least some of the trailer brakes (34, 36), and
- a second state in which the fluid flow switching device (66; 166) is configured to direct the hydraulic fluid flowing on the hydraulic control line (CL) to the high pressure hydraulic fluid accumulator (44) for feeding the latter when the pressure in the hydraulic supplementary line (SL) is at a feeding pressure level (FPL) that is distinct from the braking pressure level (BPL), **characterized in that** the fluid flow switching device (66; 166) is configured to:
- occupy the second state when the pressure in the hydraulic supplementary line (SL) is at a feeding pressure level (FPL) that is greater than the braking pressure level (BPL), and
- occupy the first state when the pressure in the hydraulic supplementary line (SL) is no more than the braking pressure level (BPL).

2. A hydraulic brake control system for a work vehicle (V) and a trailer (T) attached thereto and provided with trailer brakes (34-40), the hydraulic brake control system comprising:
- a hydraulic control line (CL) and a hydraulic supplementary line (SL) for supplying hydraulic fluid from the work vehicle to the trailer for trailer braking purpose, the hydraulic supplementary line (SL) being able to be at a braking pressure level (BPL) under predetermined conditions,
- a high pressure hydraulic fluid accumulator (44) located on the trailer and storing hydraulic fluid for trailer braking,
the hydraulic brake control system further comprising a fluid flow switching device (66; 166) configured to occupy at least two states depending on the pressure in the hydraulic supplementary line (SL), including:
- a first state in which the fluid flow switching device (66; 166) is configured to direct the hydraulic fluid flowing on the hydraulic control line (CL) to at least some of the trailer brakes (34, 36), and
- a second state in which the fluid flow switching device (66; 166) is configured to direct the hydraulic fluid flowing on the hydraulic control line (CL) to the high pressure hydraulic fluid accumulator (44) for feeding the latter when the pressure in the hydraulic supplementary line (SL) is at a feeding pressure level (FPL) that is distinct from the braking pressure level (BPL), **characterized in that** the fluid flow switching device (66; 166) is configured to:
- occupy the second state when the pressure in the hydraulic supplementary line (SL) is at a feeding pressure level (FPL) that is less than the braking pressure level (BPL), and
- occupy the first state when the pressure in the hydraulic supplementary line (SL) is greater than the braking pressure level (BPL).

3. The hydraulic brake control system of claim 1, wherein the feeding pressure level (FPL) is at least 5 bars, preferentially 10 bars, above the braking pressure level (BPL).

4. The hydraulic brake control system of claim 2, wherein the feeding pressure level (FPL) is at least 5 bars, preferentially 10 bars, below the braking pressure level (BPL).

5. The hydraulic brake control system of any one of claims 1 to 4, wherein the hydraulic brake control system is configured to generate the feeding pressure level (FPL) in the hydraulic supplementary line (SL).

6. The hydraulic brake control system of claim 5, wherein the hydraulic brake control system is configured to generate the feeding pressure level (FPL) in the hydraulic supplementary line (SL) based on a control signal (PIN 5) received from the trailer (T) indicating that a hydraulic fluid pressure in the high pressure hydraulic fluid accumulator (44) is less than a feeding threshold.

7. The hydraulic brake control system of claim 6, wherein the hydraulic brake control system comprises in the work vehicle:
- a first hydraulic fluid circuit portion (C1) configured to generate the braking pressure level (BPL) in the hydraulic supplementary line (SL),
- a second hydraulic fluid circuit portion (C2) configured to generate the feeding pressure level (FPL) in the hydraulic supplementary line (SL), based on a control signal (PIN 5) received from the trailer,
- a hydraulic fluid flow selector (64) connected both to the first hydraulic fluid circuit portion (C1) and the second hydraulic fluid circuit portion (C2) and configured to select the hydraulic fluid circuit portion of which the hydraulic fluid pressure is the highest.

8. The hydraulic brake control system of claim 7, wherein the first hydraulic fluid circuit portion (C1) comprises a hydraulic fluid pump (26) connected to a hydraulic fluid valve (28) that is configured to generate the braking pressure level (BPL) in the hydraulic supplementary line (SL).

9. The hydraulic brake control system of claim 7 or 8, wherein the second hydraulic fluid circuit portion (C2) comprises a hydraulic fluid pump (20) configured to supply hydraulic fluid and connected to an electrically driven valve (60) that is configured to be driven, depending on the control signal (PIN 5) received from the trailer, so as to direct the supplied hydraulic fluid to another valve (62) in order to generate the feeding pressure level (FPL) in the hydraulic supplementary line (SL).

10. The hydraulic brake control system of claim 9, wherein it comprises a damping accumulator (68) configured to provide a stable feeding pressure level (FPL) whatever the output flow supplied by the hydraulic fluid pump (20).

11. The hydraulic brake control system of any of claims 6 to 9, wherein the second hydraulic fluid circuit portion comprises an electric motor (M) and a hydraulic fluid pump (332) that is driven by the electric motor based on the control signal (PIN 5) received from the trailer.

12. The hydraulic brake control system of claim 6, wherein the hydraulic brake control system comprises in the work vehicle a hydraulic fluid circuit portion configured to generate both the braking pressure level (BPL) and the feeding pressure level (FPL) depending on the control signal (PINS).

13. The hydraulic brake control system of the preceding claim, wherein the hydraulic fluid circuit portion comprises a hydraulic fluid pump (26) connected to a hydraulic fluid valve (128) that is electrically controlled so as to generate one of both the braking pressure level (BPL) and the feeding pressure level (FPL) depending on the control signal.

14. The hydraulic brake control system of claim 5, wherein the hydraulic brake control system comprises in the work vehicle:
- a hydraulic fluid variable displacement pump (200) configured to generate hydraulic fluid pressure,
- a first hydraulic fluid circuit portion connected to the hydraulic fluid variable displacement pump and including a pressure reducing device (204) set at the braking pressure level (BPL) to generate the braking pressure level (BPL) from the hydraulic fluid pressure generated by the pump (200), the first hydraulic fluid circuit portion further including a first valve (206) configured to transfer or not the generated braking pressure level (BPL) downstream the first hydraulic fluid circuit portion depending on a first control application signal,
- a second hydraulic fluid circuit portion connected to the hydraulic fluid variable displacement pump and including a pressure reducing device (210) set at the feeding pressure level (FPL) to generate the feeding pressure level (FPL) from the hydraulic fluid pressure generated by the pump (200), the second hydraulic fluid circuit portion further including a second valve (212) configured to transfer or not the generated feeding pressure level (FPL) downstream the second hydraulic fluid circuit portion depending on a second control application signal.

15. The hydraulic brake control system of claim 5, wherein the hydraulic brake control system comprises in the work vehicle:
- a first hydraulic fluid circuit portion (C1') configured to generate the braking pressure level (BPL) in the hydraulic supplementary line (SL),
- a second hydraulic fluid circuit portion (C2') configured to generate the feeding pressure level (FPL) in the hydraulic supplementary line (SL),
- a hydraulic fluid flow selector (S) connected both to the first hydraulic fluid circuit portion (C1') and the second hydraulic fluid circuit portion (C2') and configured to select the second hydraulic fluid circuit portion (C2') based on a control signal (PIN 5) received from the trailer.

16. A hydraulic brake control method for a work vehicle and a trailer attached thereto and provided with trailer brakes (34-40), the work vehicle and the trailer comprising:
- a hydraulic control line (CL) and a hydraulic supplementary line (SL) for supplying hydraulic fluid from the work vehicle to the trailer for trailer braking purpose, the hydraulic supplementary line (SL) being able to be at a braking pressure level (BPL) under predetermined conditions,
- a high pressure hydraulic fluid accumulator (44) located on the trailer and storing hydraulic fluid for trailer braking,
**characterized in that**
the method comprises one or the other of the following two steps depending on the pressure in the hydraulic supplementary line (SL):
- a first step in which the hydraulic fluid flowing on the hydraulic control line (CL) is directed to at least some of the trailer brakes (34-40), this first step being performed when the pressure in the hydraulic supplementary line (SL) is no more than the braking pressure level (BPL),
and
- a second step of directing the hydraulic fluid flowing on the hydraulic control line (CL) to the high pressure hydraulic fluid accumulator (44) for feeding the latter when the pressure in the hydraulic supplementary line (SL) is at a feeding pressure level (FPL) that is distinct from the braking pressure level (BPL), this second step being performed when the pressure in the hydraulic supplementary line (SL) is at a feeding pressure level (FPL) that is greater than the braking pressure level (BPL).

17. A hydraulic brake control method for a work vehicle and a trailer attached thereto and provided with trailer brakes (34-40), the work vehicle and the trailer comprising:
- a hydraulic control line (CL) and a hydraulic supplementary line (SL) for supplying hydraulic fluid from the work vehicle to the trailer for trailer braking purpose, the hydraulic supplementary line (SL) being able to be at a braking pressure level (BPL) under predetermined conditions,
- a high pressure hydraulic fluid accumulator (44) located on the trailer and storing hydraulic fluid for trailer braking,
**characterized in that**
the method comprises one or the other of the following two steps depending on the pressure in the hydraulic supplementary line (SL):
- a first step in which the hydraulic fluid flowing on the hydraulic control line (CL) is directed to at least some of the trailer brakes (34-40), this first step being performed when the pressure in the hydraulic supplementary line (SL) is greater than the braking pressure level (BPL),
and
- a second step of directing the hydraulic fluid flowing on the hydraulic control line (CL) to the high pressure hydraulic fluid accumulator (44) for feeding the latter when the pressure in the hydraulic supplementary line (SL) is at a feeding pressure level (FPL) that is distinct from the braking pressure level (BPL), this second step being performed when the pressure in the hydraulic supplementary line (SL) is at a feeding pressure level (FPL) that is no more than the braking pressure level (BPL).
